# DEMANDE DE BREVET EUROPEEN

(11) **EP 1 584 516 A1**
(43) Date de publication de la demande: **12.10.2005**
(21) Numéro de dépôt: 05290606.2
(22) Date de dépôt: 18.03.2005
(51) Int. Cl.: B60R 9/04

(54) **Ensemble de montage d'une barre de toit longitudinale sur un toit d'un véhicule automobile**

(30) Priorité: 06.04.2004 FR 0403603
(71) Demandeur: Peugeot Citroen Automobiles S.A., 78140 Vélizy Villacoublay (FR)
(72) Inventeur: Guihaire, Stéphane, 92210 Saint-Cloud (FR); Moreau, Ludovic, 94400 Vitry sur Seine (FR)
(74) Mandataire: Lanceplaine, Jean-Claude

(57) **Abrégé**

L'invention concerne un ensemble de montage d'une barre de toit sur un toit d'un véhicule automobile du type comprenant, au moins dans chaque zone terminale, un pied comportant une surface d'appui munie d'au moins un organe de fixation sur ledit toit. L'ensemble est formé par une platine (20) comportant une face supérieure (21a) adaptée à recevoir la face inférieure du pied correspondant, un orifice (22) du passage de l'organe de fixation et une face inférieure (21b) munie d'un logement (23) de réception d'un élément d'étanchéité (24) autour dudit orifice (22) et formant une surface d'appui sur le toit.

L'invention s'applique au montage d'une barre de toit longitudinale sur un toit comportant au moins une partie en verre.

## Description

La présente invention concerne un ensemble de montage d'une barre de toit longitudinale sur le toit d'un véhicule automobile et notamment sur un toit comportant au moins une partie en verre.

Les constructeurs automobiles proposent généralement pour un même véhicule, plusieurs modèles, comme par exemple un modèle de type berline ou un modèle de type break dans chacun desquels il existe des versions différentes, notamment au niveau du pavillon.

En effet, certains véhicules d'un même modèle comportent un toit normal formé par une tôle, tandis que d'autres véhicules sont pourvus d'un toit en verre. C'est le cas par exemple des véhicules de type break.

Par ailleurs, ces véhicules sont généralement équipés de barres de toit longitudinales qui permettent de monter divers accessoires, comme par exemple une galerie de toit, un porte-vélos ou un coffre de rangement et ces barres de toit doivent pouvoir être montées sur tous les toits, aussi bien les toits en tôle que les toits en verre afin de réduire le nombre de types de barres de toit et diminuer ainsi le prix de revient.

Or, la zone du toit sur laquelle chaque pied de fixation vient s'appuyer, ne présente pas la même configuration dans la version à toit en tôle ou dans la version à toit en verre.

De même, pour certains véhicules, la partie en verre du toit ne s'étend pas sur toute la longueur de ce toit, si bien que la zone d'appui du pied avant de chaque barre de toit ne présente pas la même configuration que la zone d'appui du pied arrière.

En effet, la différence de configuration réside dans le fait que pour un toit en verre, la zone sur laquelle vient se fixer un pied de la barre de toit présente une épaisseur inférieure à la zone de fixation dans le cas d'un toit en tôle étant donné l'absence de la tôle formant le toit.

L'invention a donc pour but de proposer un ensemble de montage d'une barre de toit longitudinale qui permet de monter la même barre de toit aussi bien sur un toit en tôle que sur un toit en verre d'un véhicule automobile.

L'invention a donc pour objet un ensemble de montage d'une barre de toit longitudinale sur un toit d'un véhicule automobile, notamment sur un toit comportant au moins une partie en verre, ladite barre de toit comprenant, au moins dans chaque zone terminale, un pied comportant une surface d'appui munie d'au moins un organe de fixation sur ledit toit et s'étendant sensiblement perpendiculairement à ladite surface d'appui, caractérisé en ce qu'il est formé par une platine comportant une face supérieure adaptée à recevoir la face inférieure du pied correspondant, un orifice de passage de l'organe de fixation et une face inférieure munie d'un logement de réception d'un élément d'étanchéité autour dudit orifice et formant une surface d'appui sur le toit.

Selon d'autres caractéristiques de l'invention :
- la face inférieure de la platine comporte deux logements de réception d'un élément d'étanchéité et munis chacun d'un orifice de passage d'un organe de fixation sur le toit, lesdits éléments d'étanchéité formant une surface sensiblement plane d'appui sur ce toit,
- la platine comporte des moyens d'indexage sur le toit,
- les moyens d'indexage comprennent un pion de centrage en saillie au-dessous de la face inférieure de la platine et muni d'un élément d'étanchéité,
- l'élément d'étanchéité du pion de centrage est placé dans un logement aménagé sur la face inférieure de la platine entre les logements des éléments d'étanchéité des organes de fixation, et
- chaque élément d'étanchéité est formé par un bloc en mousse.

L'invention sera mieux comprise à la lecture de la description qui va suivre, donnée à titre d'exemple et faite en se référant aux dessins annexés, sur lesquels :
- la Fig. 1 est une vue schématique en perspective d'un toit d'un véhicule automobile équipé de barre de toit longitudinale,
- la Fig. 2 est une vue schématique en perspective d'un pied d'appui d'une barre de toit longitudinale,
- la Fig. 3 est une vue schématique en perspective d'une zone de montage du pied d'appui d'une barre longitudinale dans le cas d'un toit classique en tôle,
- la Fig. 4 est une vue schématique en coupe longitudinale du pied d'appui d'une barre longitudinale montée sur le toit de la Fig. 3,
- la Fig. 5 est une vue schématique en perspective d'une zone de montage du pied d'appui d'une barre longitudinale dans le cas d'un toit en verre,
- la Fig. 6 est une vue schématique en perspective d'un ensemble de montage conforme à l'invention,
- la Fig. 7 est une vue schématique en coupe longitudinale du pied d'appui d'une barre longitudinale équipée de l'ensemble de montage conforme à l'invention.

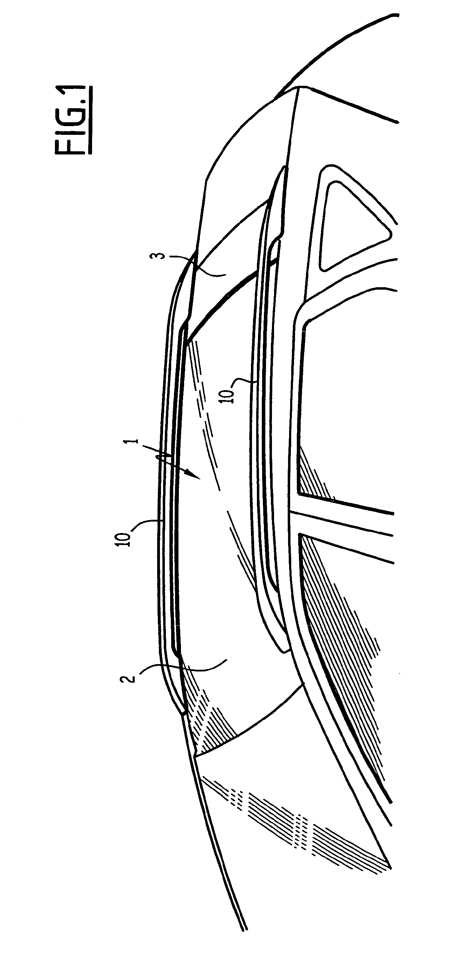

Sur la Fig. 1, on a représenté schématiquement un toit 1 d'un véhicule automobile qui est équipé, dans chacune des zones situées sur les côtés extérieurs, d'une barre de toit désignée par la référence générale 10 et s'étendant dans la direction longitudinale du véhicule.

Dans l'exemple de réalisation représenté sur la Fig. 1, le toit 1 comporte une partie avant 2 en verre et une partie arrière 3 en tôle.

Les barres de toit 10 s'étendant parallèlement l'une par rapport à l'autre de chaque côté extérieur du toit 1 permettent de monter divers accessoires, comme par exemple une galerie de toit, un porte-vélos ou un coffre de rangement.

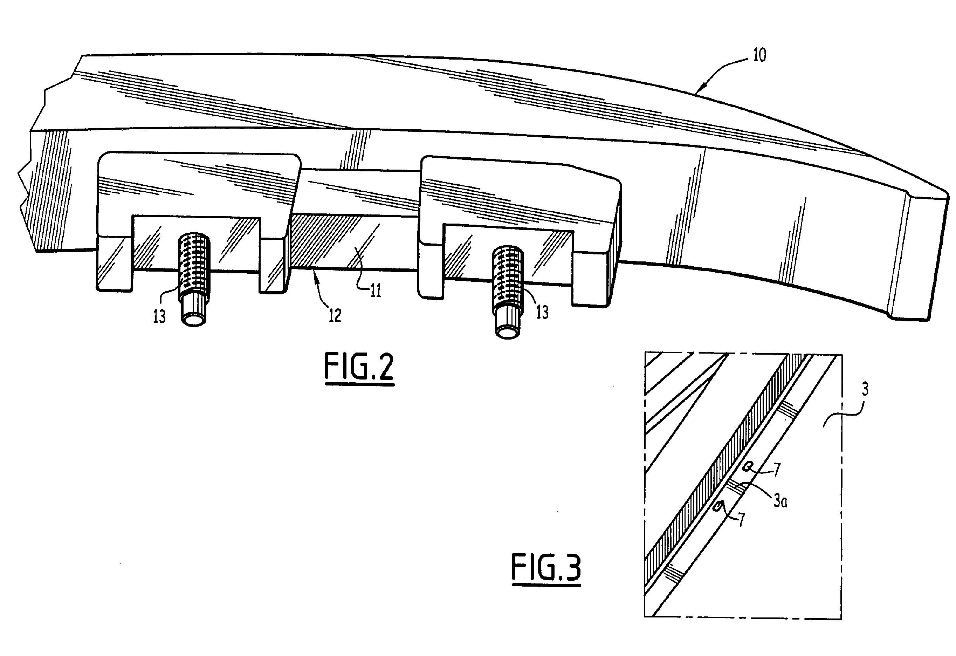

Ainsi que représenté sur les Figs. 1 et 2, chaque barre de toit 10 comprend, au moins dans chaque zone terminale, un pied 11 comportant une surface d'appui 12 destinée à être appliquée sur le toit 1 et qui est munie d'au moins un organe de fixation 13.

Dans l'exemple de réalisation représenté sur la Fig. 2, chaque pied 11 comporte deux organes de fixation 13 s'étendant perpendiculairement à la surface d'appui 12 et constitué chacun par un goujon.

Compte tenu de la structure du toit 1 qui comporte une partie 2 en verre et une partie 3 en tôle, un des pieds 11 de chaque barre de toit 10 est fixé sur la partie en verre 2 et l'autre pied de ladite barre de toit 10 est fixé sur la partie 3 en tôle.

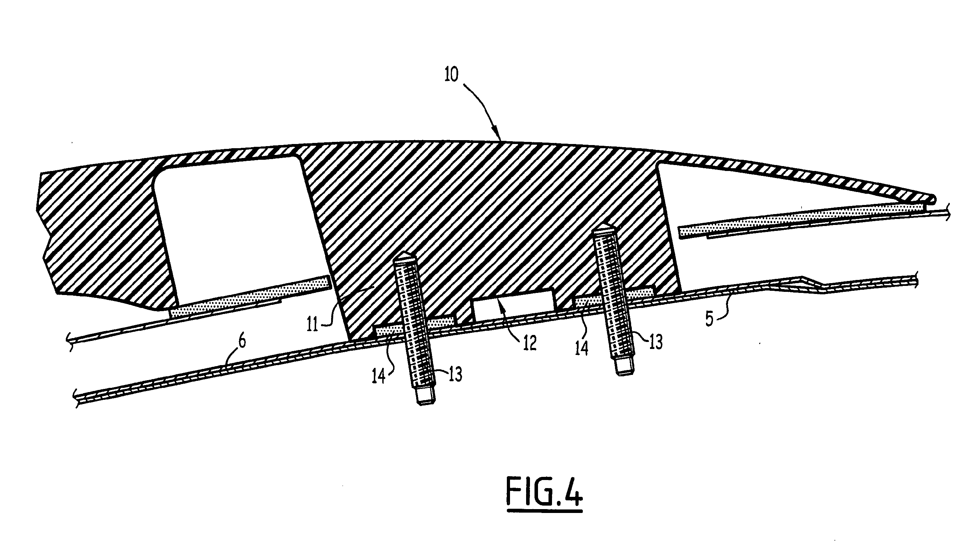

Ainsi que montré sur les Figs. 3 et 4, dans la partie 3 en tôle du toit 1, la zone 3a de fixation du pied 11 de la barre de toit 10 comporte deux tôles superposées, une première tôle 5 formée par le rebord longitudinal du flanc de l'habitacle et une seconde tôle 6 formée par le toit. Dans cette zone 3a, le pied 11 correspondant de la barre de toit 10 est appliqué directement sur la tôle 5 en interposant au niveau de chaque organe de fixation 13, un élément d'étanchéité 14. Les tôles 5 et 6 sont pourvues dans la zone 3a, de deux orifices 7 traversant lesdites tôles pour le passage dans chacun desdits orifices 7 d'un organe de fixation 13.

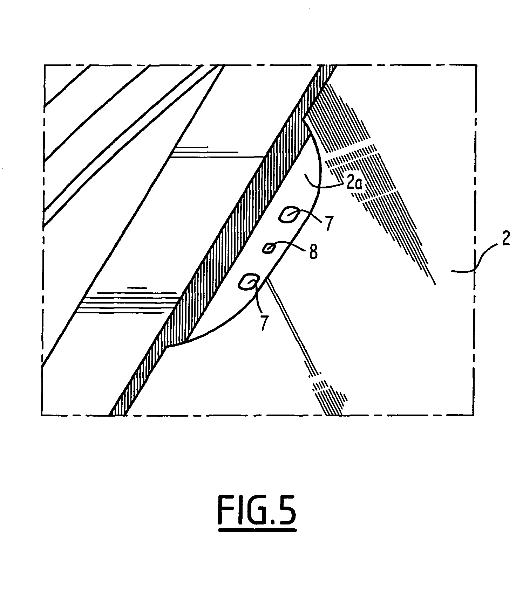

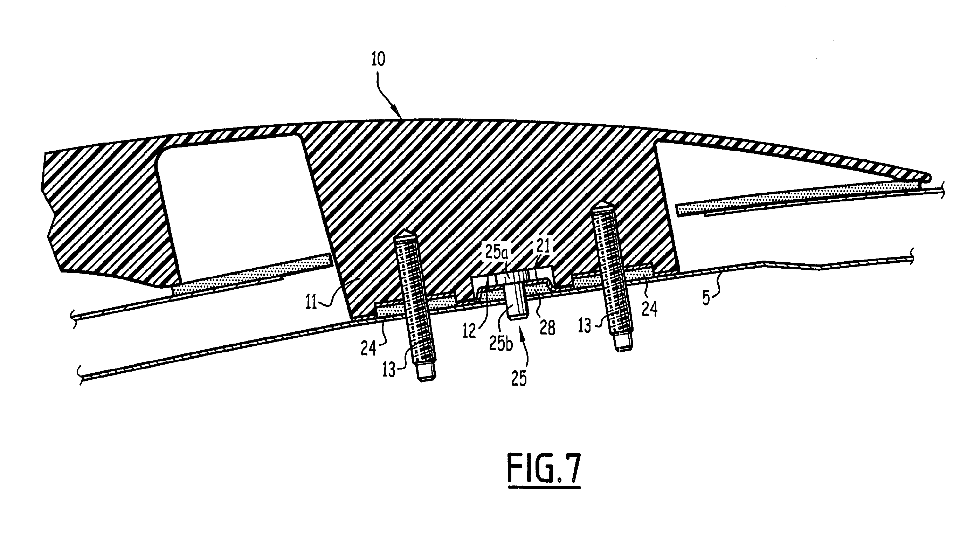

Par contre, au niveau de la partie 2 du toit en verre, la zone 2a de fixation du pied 11 de chaque barre de toit 10 est constituée, comme montré sur les Figs. 5 et 7, de la tôle 5 uniquement du rebord longitudinal du flanc de l'habitacle. En effet, la partie 2 en verre est découpée au niveau de cette zone 2a de façon à permettre le passage du pied 11 correspondant pour qu'il soit fixé directement sur la tôle 5.

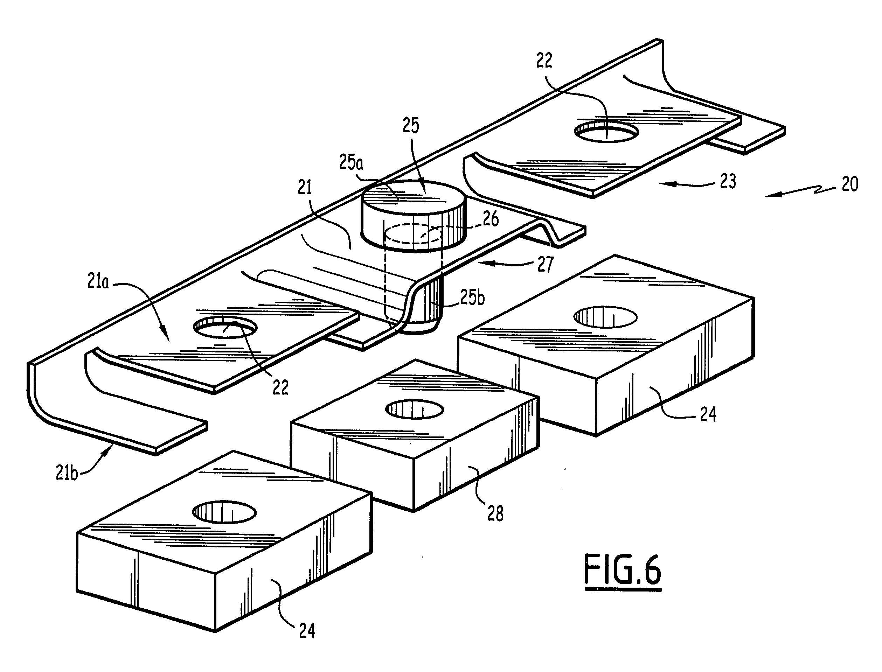

Pour compenser la différence d'épaisseur de tôles entre la zone de fixation 3a de la partie 3 en tôle et la zone 2a de la partie 2 en verre, le pied 11 correspondant à la barre de toit 10 destiné à être monté sur ladite zone 2a est équipé d'un ensemble de montage désigné dans son ensemble par la référence 20 et représenté à la Fig. 6.

Cet ensemble de montage est formé par une platine 21 comportant une face supérieure 21a adaptée à recevoir la face inférieure 12 du pied 11 correspondant et qui, à cet effet, présente un profil complémentaire au profil de ladite face inférieure 12 du pied 11. Cette platine 21 comporte aussi une face inférieure 21 b destinée à être appliquée sur la tôle 5 dans la zone 2a de montage.

Dans l'exemple de réalisation représenté à la Fig. 6, la platine 20 comporte deux orifices 22 destinés chacun au passage d'un organe de fixation 13 du pied 11. Dans le cas où ce pied 11 comporte un seul organe de fixation 13, la platine 20 n'est munie que d'un seul orifice 22.

Par ailleurs, la face inférieure 21 b de la platine 21 est pourvue, au niveau de chaque orifice 22, d'un logement 23 de réception d'un élément d'étanchéité 24 autour dudit orifice 22.

Enfin, la platine 21 comporte des moyens d'indexage sur la zone 2a du toit et qui sont formés par un pion de centrage 25 comportant une tête 25a en appui sur la face supérieure 21a de la platine 21 et une tige 25b qui traverse la platine 21 par un orifice 26 et qui est en saillie au-dessous de la face inférieure 21 b de ladite platine 21. La tige 25b du pion de centrage 25 est destinée à pénétrer dans un orifice 8 ménagé dans la tôle 5 au niveau de la zone 2a du toit.

Ce pion de centrage 25 et l'orifice 26 correspondant sont placés entre les orifices 22 de passage des éléments de fixation 13 et l'orifice 8 de positionnement de la tige 25b du pion 25 est également placé entre les orifices 7 de passage des organes de fixation 13 dans la zone 2a (Fig. 5).

Afin d'assurer l'étanchéité au niveau du pion de centrage 25 et de l'orifice 26 correspondant, la face inférieure 21b de la platine 21 est pourvue d'un logement 27 au niveau de l'orifice 26 entre les logements 23. Ce logement 27 est muni d'un élément d'étanchéité 28 qui forme avec les éléments d'étanchéité 24 une surface d'appui sur la tôle 5 dans la zone 2a du toit. De préférence, les éléments d'étanchéité 24 et 28 sont constitués chacun par un bloc en mousse.

Lors du montage de chaque barre de toit 10, le pied 11 destiné à être fixé sur la zone 2a de la partie 2 en verre du toit 1 est équipé de la platine 20 comportant le pion de centrage 25 et les éléments d'étanchéité 24 et 28, comme montré à la Fig. 7. Les organes de fixation 13 traversent les orifices 22 ainsi que les éléments d'étanchéité 24.

Ensuite, chaque barre de toit 10 est montée sur le toit 1 en disposant un pied 11 sur la zone 3a de la partie 3 en tôle du toit 1 et un pied 11 sur la zone 2a de la partie 2 en verre dudit toit 1. La tige 25b du pion de centrage 25 assure l'indexage du pied 11 correspondant en pénétrant dans l'orifice 8 et les organes de fixation 13 pénètrent chacun dans un orifice 7, ainsi que montré sur les Figs. 4 et 7.

Pour maintenir la barre de toit 10, un écrou, non représenté, est vissé sur l'extrémité libre de chaque organe de fixation 13 par l'intérieur de l'habitacle du véhicule automobile.

L'ensemble de montage selon l'invention présente l'avantage de pouvoir utiliser des barres de toit longitudinales développées pour des véhicules équipés d'un toit classique en tôle sur des véhicules automobiles comportant une partie de toit en verre et une partie de toit en tôle ou encore pour des véhicules ayant un toit complètement en verre.

De plus, l'ensemble de montage selon l'invention assure l'indexage du pied correspondant de la barre de toit ainsi que l'étanchéité au niveau de ce pied dans la partie en verre du toit du véhicule automobile.

## Revendications

1. Ensemble de montage d'une barre de toit (10) longitudinale sur un toit (1) d'un véhicule automobile, notamment un toit comportant au moins une partie en verre, ladite barre de toit (10) comprenant, au moins dans chaque zone terminale, un pied (11) comportant une surface d'appui (12) munie d'au moins un organe de fixation (13) sur ledit toit et s'étendant perpendiculairement à ladite surface (12), **caractérisé en ce qu'**il est formé par une platine (20) comportant une face supérieure (21 a) adaptée à recevoir la face inférieure (12) du pied (11) correspondant, un orifice (22) de passage de l'organe de fixation (13) et une face inférieure (21 b) munie d'un logement (23) de réception d'un élément d'étanchéité (24) autour dudit orifice (22) et formant une surface d'appui sur le toit (1).

2. Ensemble selon la revendication 1, **caractérisé en ce que** la face inférieure (21b) de la platine (21) comporte deux logements (23) de réception d'un élément d'étanchéité (24) et munis chacun d'un orifice (22) de passage d'un organe de fixation (13) sur le toit (1), lesdits éléments d'étanchéité (24) formant une surface sensiblement plane d'appui sur ce toit (1).

3. Ensemble selon la revendication 1 ou 2, **caractérisé en ce que** la platine (21) comporte des moyens (25) d'indexage sur le toit (1).

4. Ensemble selon la revendication 3, **caractérisé en ce que** les moyens d'indexage comprennent un pion de centrage (25) en saillie au-dessous de la face inférieure (21 b) de la platine (21) et muni d'un élément d'étanchéité (28).

5. Ensemble selon la revendication 4, **caractérisé en ce que** l'élément d'étanchéité (28) du pion de centrage (25) est placé dans un logement (27) ménagé sur la face inférieure (21 b) de la platine (21) entre les logements (23) des éléments d'étanchéité (24) des organes de fixation (13).

6. Ensemble selon l'une quelconque des revendications 1 à 5, **caractérisé en ce que** chaque élément d'étanchéité (24 ; 28) est formé par un bloc en mousse.
